# EUROPEAN PATENT SPECIFICATION

(11) **EP 4 406 979 B1**
(45) Date of publication and mention of the grant of the patent: **12.11.2025**
(21) Application number: 22880628.7
(22) Date of filing: 12.08.2022
(51) Int. Cl.: C08F 8/48, C08F 8/30

(54) **COMPOUND AND PRODUCTION METHOD FOR COMPOUND**
VERBINDUNG UND HERSTELLUNGSVERFAHREN FÜR DIE VERBINDUNG
COMPOSÉ, ET PROCÉDÉ DE FABRICATION DE CELUI-CI

(30) Priority: 15.10.2021 JP 2021169437
(43) Date of publication of application: 31.07.2024
(73) Proprietor: Denka Company Limited, Tokyo 103-8338 (JP)
(72) Inventor: NISHINO, Wataru, Tokyo 103-8338 (JP)
(74) Representative: Gulde & Partner
(86) International application number: PCT/JP2022/030810
(87) International publication number: WO 2023/062931

(56) References cited:
- WO-A1-2020/059997
- JP-A- 2010 506 940
- JP-A- 2013 227 591
- JP-A- 2014 515 729
- JP-A- 2019 112 533
- VOGT A P ET AL: "An Efficient Route to Macromonomers via ATRP and Click Chemistry", MACROMOLECULES, AMERICAN CHEMICAL SOCIETY, US, vol. 39, no. 16, 1 January 2006 (2006-01-01), pages 5286 - 5292, XP002528658, ISSN: 0024-9297, DOI: 10.1021/MA0610461

## Description

### Technical Field

The present invention relates to a compound and a method of producing the compound.

### Background

Comb polymers, such as bottle brush polymers, are graft polymers that are expected to be developed as temperature and other stimulus-responsive polymers, polymer templates, or polymers for drug delivery systems. Although such graft polymers can be obtained by various graft polymerizations, there has been expected a grafting-through method using macromonomers as a novel method therefor (Non-Patent Literature 1).

### Citation List

### Non-Patent Literature

Non-Patent Literature 1: "6.14 Graft Copolymers and Comb-Shaped Homopolymers", Polymer Science A Comprehensive Reference Volume 6, 2012, Pages 511-542
Non-Patent Literature 2: "An Efficient Route to Macromonomers via ATRP and Click Chemistry", MACROMOLECULES, AMERICAN CHEMICAL SOCIETY, US, vol. 39, no. 16, 1 January 2006, pages 5286-5292.

### Summary of Invention

### Technical Problem

Macromonomers that can be used in the grafting-through method are required to be compounds having a polymer portion capable of serving as a side chain in the graft polymer and a polymerizable group capable of forming a main chain. However, the range of compounds offered as such macromonomers is still small and their synthesis methods are limited.

The present invention has been made in consideration of these problems, and provides a novel compound having a polymer portion and a polymerizable group, and a method of synthesizing the same.

### Solution to Problem

According to the present invention, there is provided a compound comprising a first portion and a second portion, wherein the first portion comprises a polymer chain, and the second portion comprises a triazole skeleton and a polymerizable group bonded to the triazole skeleton.

The present invention is set out in the appended set of claims. Hereinafter, various embodiments of the present invention will be shown by means of examples.

### Description of Embodiments

Hereinafter, embodiments of the present invention will be explained below.

### 1. Compound

The compound according to one embodiment of the present invention contains a first portion and a second portion. The first portion and second portion are covalently bonded to each other.

### 1-1. First portion

The first portion has a polymer chain. The first portion may also have an end group derived from an atomic transfer radical polymerization initiator or an iodine transfer polymerization initiator. The polymer chain and the end group derived from an atomic transfer radical polymerization initiator or an iodine transfer polymerization initiator are covalently bonded to each other.

### 1-1-1. Polymer chain

The polymer chain has a radically polymerizable monomer unit. Radically polymerizable monomer units are structural units of polymer chains derived from radically polymerizable monomers. The radically polymerizable monomer units include styrene-based monomer units, (meth)acryl-based monomer units, diene-based monomer units, vinyl ether-based monomer units, and unsaturated nitrile-based monomer units. These may be used singly or in combination.

Examples of the styrene-based monomer units include those derived from styrene-based monomers, such as styrene, o-methylstyrene, m-methylstyrene, p-methylstyrene, 2,4-dimethylstyrene, ethylstyrene, p-tert-butylstyrene, α-methylstyrene, and α-methyl-p-methylstyrene.

Examples of the (meth)acryl-based monomer unit include those derived from (meth)acryl-based monomers, such as acrylic acid, methacrylic acid, methyl acrylate, methyl methacrylate, ethyl acrylate, ethyl methacrylate, n-propyl acrylate, n-propyl methacrylate, isopropyl acrylate, isopropyl methacrylate, n-butyl acrylate, n-butyl methacrylate, isobutyl acrylate, isobutyl methacrylate, sec-butyl acrylate, sec-butyl methacrylate, tert-butyl acrylate, tert-butyl methacrylate, 2-ethylhexyl acrylate, 2-ethylhexyl methacrylate, n-octyl acrylate, n-octyl methacrylate, isooctyl acrylate, isooctyl methacrylate, n-nonyl acrylate, n-nonyl methacrylate, isononyl acrylate, isononyl methacrylate, lauryl acrylate, lauryl methacrylate, stearyl acrylate, stearyl methacrylate, ethoxydiethylene glycol acrylate, ethoxydiethylene glycol methacrylate, methoxypolyethylene glycol acrylate, methoxypolyethylene glycol methacrylate, 2-hydroxyethyl acrylate, 2-hydroxyethyl methacrylate, 2-hydroxypropyl acrylate, 2-hydroxypropyl methacrylate, tetrahydrofurfurfuryl acrylate, tetrahydrofurfuryl methacrylate, isobonyl acrylate, and isobonyl methacrylate. The term (meth)acryl-based monomer (unit) means acryl-based monomer (unit) and methacryl-based monomer (unit).

Examples of the diene-based monomer unit include those derived from conjugated diene monomers, such as 1,3-butadiene, isoprene, 2,3-dimethyl-1,3-butadiene, 1,3-pentadiene, and chloroprene.

Examples of the vinyl ether-based monomer unit include those derived from vinyl ether-based monomers, such as vinyl acetate, vinyl propionate, 2-hydroxyethyl vinyl ether, diethylene glycol monovinyl ether, 4-hydroxybutyl vinyl ether, vinyl methyl ether, vinyl butyl ether, and vinyl octyl ether.

Examples of the unsaturated nitrile-based monomer unit include those derived from unsaturated nitrile monomers, such as acrylonitrile, methacrylonitrile, ethacrylonitrile, and phenylacrylonitrile.

The polymer chain may be a homopolymer constituted by monomer units derived from a single monomer or a copolymer constituted by monomer units derived from a plurality kinds of monomers. In a case where the polymer chain is a copolymer, the polymer chain may be a random copolymer, an alternating copolymer, a block copolymer, a graft copolymer, or the like.

### 1-1-2. End group derived from atomic transfer radical polymerization initiator

End groups derived from the atomic transfer radical polymerization initiator are sites derived from polymerization initiator used for atomic transfer radical polymerization (ATRP). ATRP initiators are organohalogen compounds.

Examples of the organohalogen compound as the ATRP initiator include methyl 2-chloropropionate, 2,2-dichloroacetophenone, 3-(trimethoxysilyl)propyl 2-bromo-2-methylpropanoate, chloroacetonitrile, methyl chloroacetate, tert-butyl 2-bromoisobutyrate, (1-bromoethyl)benzene, methyl 2-bromopropionate, methyl 2-chloropropionate, 3-(trichlorosilyl)propyl 2-bromo-2-methylpropanoate, 3-(triethoxysilyl)propyl 2-bromo-2-methylpropanoate, 2-[(2-hydroxyethyl)disulfanyl]ethyl 2-bromo-2-methylpropionate, 11-mercaptoundesyl 2-bromo-2-methylpropanoate, bromoacetonitrile, (1-chloroethyl)benzene, ethyl 2-bromoisobutyrate, [11-[(2-bromo-2-methylpropanoyl)oxy]undesyl]phosphonic acid, 2-hydroxyethyl 2-bromo-2-methylpropanoate, ethyl bromoacetate, allylbromide, 2-bromoisobutyryl bromide, methyl bromoacetate, methyl bromoacetate, and 2-bromopropionitrile. These may be used singly or in combination.

In a case where Y-X (where Y is an organic group and X is a halogen group) is used as the organohalogen compound, the end group derived from an atomic transfer radical polymerization initiator is Y. Y is bonded to the polymer chain by a carbon atom or the like in Y to which the halogen group is bonded. Y preferably has a substituent capable of delocalizing unpaired electrons, such as a carbonyl group, a cyano group, a nitro group, or a phenyl group. Further, in the organohalogen compound Y-X, it is preferable that the carbon atom to which the halogen group X is bonded is adjacent to electron-withdrawing group.

For example, in a case where ethyl 2-bromoisobutyrate is used as the ATRP initiator, the end group derived from an atomic transfer radical polymerization initiator has a structure represented by the following general formula (1). In the general formula (1), A¹ represents a bond with the polymer chain.

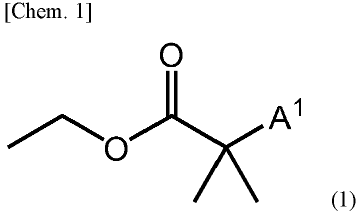

### 1-1-3. End group derived from iodine transfer polymerization initiator

End groups derived from the iodine transfer polymerization (ITP) initiators are sites derived from polymerization initiators used for iodine transfer polymerization. ITP initiators are organoiodine compounds.

Examples of the organoiodine compound as the ITP initiator include 2-iodoacetic acid, methyl 2-iodoacetate, ethyl 2-iodoacetate, 2-iodopropionic acid, ethyl 2-iodopropionate, ethyl 2-iodobutyrate, ethyl 2-iodovalerate, methyl 2-iodoisobutyrate, ethyl 2-iodoisobutyrate, benzyl 2-iodoisobutyrate, α-iodo-γ-butyrolactone, 2-iodoisobutyrate-2-hydroxyethyl, diethyl 2-iodo-2-methylmalonate, ethyl 2-iodo-2-methylacetoacetate, 2-iodo-2-phenylacetic acid, ethyl 2-iodo-2-phenylacetate, ethyl 2-iodo-2-(4'-methylphenyl)acetate, ethyl 2-iodo-(4'-nitrophenyl)acetate, 2-iodo-2-phenylacetate-2-hydroxyethyl, 2-iodoacetonitrile, 2-iodopropionitrile, 2-iodoisobutyronitrile, α-iodobenzylcyanide, 2-iodopropionamide, 2-iodoacetophenone, benzylioside, 4-nitrobenzylioside, (1-iodoethyl)benzene, iododiphenylmethane, 9-iodo-9H-fluorene, bis(2-iodoisobutyric acid) ethylene glycol, bis(2-iodo-2-phenylacetic acid) ethylene glycol, p-xylyleneioside, 1,4-bis(1'-iodoethyl)benzene, diethyl 2,5-diiodoadipic acid, tris(2-iodoisobutyrate)glycerol, and 1,3,5-tris(1'-iodoethyl)benzene. These may be used singly or in combination.

In a case where Y-I (where Y is an organic group and I is iodine) is used as the organoiodine compound, the end group derived from an iodine transfer polymerization initiator is Y. Y is bonded to the polymer chain by a carbon atom or the like in Y to which iodine is bonded. Y preferably has a substituent capable of delocalizing unpaired electrons, such as a carbonyl group, a cyano group, a nitro group, or a phenyl group. Further, in the organoiodine compound Y-I, it is preferable that the carbon atom to which iodine I is bonded is adjacent to electron-withdrawing group.

### 1-2. Second portion

The second portion has a triazole skeleton and a polymerizable group bonded to the triazole skeleton. The nitrogen atom in the cyclic structure of the triazole skeleton is covalently bonded to the polymer chain in the first portion. Carbon atoms in the cyclic structure of the triazole skeleton are also covalently bonded to the polymerizable group.

Polymerizable groups are functional groups capable of polymerization by themselves or copolymerization with other monomers (for example, radical polymerization, anionic polymerization, and cationic polymerization). From the viewpoint of ease of introduction as a polymerizable group bonded to the triazole skeleton, the polymerizable group is a vinyl group.

The second portion has a structure represented by the following general formula (2).

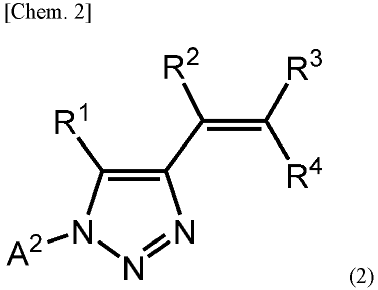

In the general formula (2), A² represents a bond with the first portion. R¹ is any one selected from the group consisting of hydrogen, chlorine, bromine, iodine, a substituted or unsubstituted alkyl group, alkenyl group, aryl group, mercapto group, or heterocyclyl group, a substituted or unsubstituted silyl group, a substituted or unsubstituted ether group, and a substituted or unsubstituted amino group. R², R³, and R⁴ are each independently any one selected from the group consisting of hydrogen, chlorine, bromine, iodine, a substituted or unsubstituted alkyl group, alkenyl group, aryl group, mercapto group, or heterocyclyl group, a substituted or unsubstituted silyl group, a substituted or unsubstituted ether group, and a substituted or unsubstituted amino group.

A specific example of the second portion is a structure represented by the following general formula (3) wherein R¹, R², R³, and R⁴ are hydrogen atoms. In the following general formula (3), A² represents a bond with the first portion.

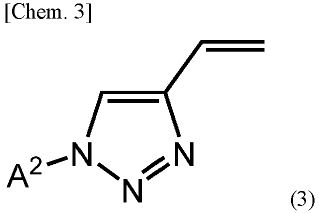

### 1-3. Other features

The number-average molecular weight (Mn) of the compound according to one embodiment of the present invention is preferably 1000 to 100000, more preferably 2000 to 50000.

The compound according to one embodiment of the present invention has, for example, a structure represented by the following formula (6), specifically.

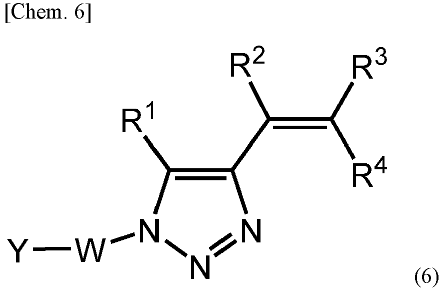

R¹, R², R³, and R⁴ in the formula (6) are the same as in the formula (2). W is the polymer chain described above contained in the first portion. Y is an organic group, and is the end group derived from the atomic transfer radical polymerization initiator or iodine transfer polymerization initiator described above.

### 2. Method of producing the compound

A method of producing the compound according to one embodiment of the present invention includes a polymerization step, an azide group introduction step, and a polymerizable group introduction step.

### 2-1. Polymerization step

In the polymerization step, the first intermediate is produced by polymerization of a radically polymerizable monomer.

The radically polymerizable monomer include styrene-based monomers, (meth)acryl-based monomers, diene-based monomers, vinyl ether-based monomers, and unsaturated nitrile-based monomers. These may be used singly or in combination.

Examples of the styrene-based monomer include styrene, o-methylstyrene, m-methylstyrene, p-methylstyrene, 2,4-dimethylstyrene, ethylstyrene, p-tert-butylstyrene, α-methylstyrene, and α-methyl-p-methylstyrene.

Examples of the (meth)acryl-based monomer include methyl acrylate, methyl methacrylate, ethyl acrylate, ethyl methacrylate, n-propyl acrylate, n-propyl methacrylate, isopropyl methacrylate, isopropyl methacrylate, n-butyl acrylate, n-butyl methacrylate, isobutyl methacrylate, isobutyl methacrylate, sec-butyl acrylate, sec-butyl methacrylate, tert-butyl acrylate, tert-butyl methacrylate, 2-ethylhexyl acrylate, 2-ethylhexyl methacrylate, n-octyl acrylate, n-octyl methacrylate, isooctyl acrylate, isooctyl methacrylate, n-nonyl acrylate, n-nonyl methacrylate, isononyl acrylate, and isononyl methacrylate.

Examples of the diene-based monomer include conjugated diene monomers, such as 1,3-butadiene, isoprene, 2,3-dimethyl-1,3-butadiene, 1,3-pentadiene, and chloroprene.

Examples of the vinyl ether-based monomer include vinyl acetate, vinyl propionate, vinyl methyl ether, vinyl butyl ether, and vinyl octyl ether.

Examples of the unsaturated nitrile-based monomer include acrylonitrile, methacrylonitrile, ethacrylonitrile, and phenylacrylonitrile.

The polymerization reaction of the polymerization step is performed by polymerizing a radically polymerizable monomer in the presence of a polymerization initiator. Examples of the polymerization initiator to be used include the ATRP initiator and ITP initiator described above.

In a case where the polymerization reaction is atomic transfer radical polymerization using an ATRP initiator, a catalyst such as a transition metal complex such as copper is added.

In a case where the polymerization reaction is iodine transfer polymerization using an ITP initiator, a catalyst such as a salt containing sodium azide or iodine is added.

The first intermediate is a polymer (homopolymer or copolymer) of a radically polymerizable monomer. Such a polymer has a structure that serves as a polymer chain of the first portion described above. It is also preferable that the first intermediate has an azidizable end structure. Examples of the azidizable end structures include carbons such as a methylene group substituted by halogen such as fluorine, chlorine, bromine or iodine.

Further, in a case where the polymerization reaction is atomic transfer radical polymerization using an ATRP initiator, the first intermediate has an end group derived from an atomic transfer radical polymerization initiator.

Further, in a case where the polymerization reaction is atomic transfer radical polymerization using an ITP initiator, the first intermediate has an end group derived from an iodine transfer polymerization initiator.

### 2-2. Azide group introduction step

In the azide group introduction step, a second intermediate is produced by an azide reaction with the first intermediate.

The azidation reaction may be performed by reacting an azidation agent with the first intermediate. Examples of the azidation reaction include nucleophilic substitution reactions, reactions using organometallic reactants (organolithium reactants and Grignard reactants), and coupling reactions using transition metal catalysts (for example, copper catalysts).

Examples of the azidation agent include sodium azide, trimethylsilyl azide, diphenylphosphate azide, tributyltin azide, and tetramethylguanidinium azide. Any other azidation agents may be selected depending on the azide reaction used.

The second intermediate has a polymer of radically polymerizable monomer and an azide group. Further, the second intermediate may further have an end group derived from an atomic transfer radical polymerization initiator.

### 2-3. Polymerizable group introduction step

In the polymerizable group introduction step, the second intermediate is reacted with monovinylacetylene or a monovinylacetylene derivative (monovinylacetylene-based compound) to obtain a compound containing the first portion and the second portion described above.

In the polymerizable group introduction step, the azide group of the second intermediate is reacted with monovinylacetylene or a monovinylacetylene derivative to form a triazole skeleton.

The monovinylacetylene or monovinylacetylene derivative have a structure represented by the following general formula (4).

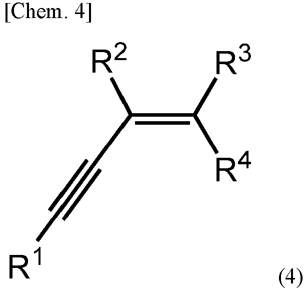

R¹, R², R³, and R⁴ in the formula (4) are the same as in the formula (2). Regarding monovinylacetylene, R¹, R², R³, and R⁴ in the formula (4) are hydrogen atoms.

### EXAMPLES

The present invention is described in more detail with reference to the following examples. It should also be noted that these are all exemplary and are not intended to limit the scope of the present invention.

### (Example 1)

### (Styrene polymerization step)

The polymerization reaction was performed according to Reference 1 (J Polym Sci Part A: Polym Chem 2006, 44, 1667-1675.).

First, 50 g of styrene, 2.2 g of pentamethyldiethylenetriamine, and 0.90 g of copper(I) bromide were charged to a 100 ml eggplant-shaped flask, and frozen and degassed three times under nitrogen atmosphere. The reaction solution was heated to 50°C and then stirred with a magnetic stirrer. Polymerization was initiated by adding 2.4 g of ethyl 2-bromoisobutyrate as polymerization initiator. When the polymerization rate reached 80%, the temperature of the reaction solution was lowered to 20°C to stop the reaction. Methanol was added to the reaction solution to precipitate the polystyrene such that the polymer, intermediate 1-1, was recovered. A portion of the polymer was sampled for analysis and the remainder was used for azidation.

The number-average molecular weight of the intermediate 1-1 was also measured by gel permeation chromatography (GPC). The number-average molecular weight of the intermediate 1-1 was 5000.

The GPC measurement conditions are as follows.
Equipment: HLC-8320GPC (manufactured by Tosoh Corporation)
Column: 3 TSKgel GMHHR-H in series
Temperature: 40°C
Detection: differential refractive index
Solvent: Tetrahydrofuran
Calibration curve: prepared using standard polystyrene (PS)

### (Azidation step)

The polystyrene (intermediate 1-1) obtained in polymerization was dissolved in 50 ml of dimethylformamide, and 0.89 g of sodium azide was added at room temperature to azide the polymer so as to obtain intermediate 2-1.

The intermediate 2-1 was also analyzed by infrared spectrophotometer. A peak was confirmed in the vicinity of 2100 cm⁻¹, and the introduction of azide groups was confirmed. The measurement conditions of the infrared spectrophotometer were as follows.
Equipment: Frontier (manufactured by PerkinElmer Corporation)
Start Range: 4000 cm⁻¹
End Range: 400 cm⁻¹
Number of integration: 16 times
Resolution: 4.0 cm⁻¹
Interval: 1.0 cm⁻¹
Measurement method: ATR method (DuraScope)

### (Huisgen reaction)

After the azidation step, 0.78 g of monovinylacetylene (MVA), 1.1 g of copper (II) acetate, and 1.5 g of sodium ascorbate were added to react the azide ends of the intermediate 2-1 with MVA so as to obtain 1-polystyrene-4-vinyl-1,2,3-triazole (compound 1).

The obtained compound 1 was dissolved in tetrahydrofuran, precipitated by adding methanol, and then filtered. The residue was dried under reduced pressure to obtain a sample. After dissolving the sample in heavy chloroform, the 1H-NMR spectrum was measured. Measurement data was corrected based on the peak of chloroform (7.24 ppm) in heavy chloroform used as the solvent.

As a result of the NMR measurement, peaks derived from hydrogen atom 3 and hydrogen atom 4 in the following formula (5) were confirmed between 5 and 6 ppm.

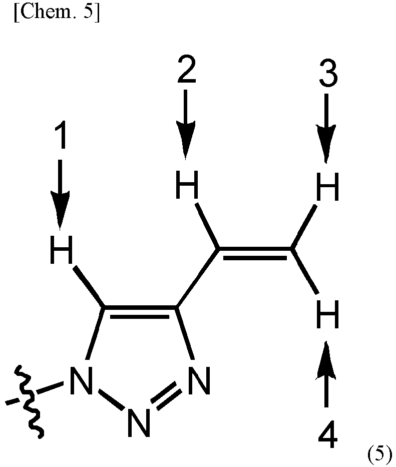

The number-average molecular weight of the compound 1 was also measured by gel permeation chromatography (GPC). The number-average molecular weight of the compound 1 was 5000.

The GPC measurement conditions are as follows.
Equipment: HLC-8320GPC (manufactured by Tosoh Corporation)
Column: 3 TSKgel GMHHR-H in series
Temperature: 40°C
Detection:differential refractive index
Solvent: Tetrahydrofuran
Calibration curve: prepared using standard polystyrene (PS)

### (Example 2)

### (Styrene polymerization step)

The polymerization reaction was performed according to Reference 1.

First, 50 g of styrene, 1.1 g of pentamethyldiethylenetriamine, and 0.45 g of copper(I) bromide were charged to a 100 ml eggplant-shaped flask, and frozen and degassed three times under nitrogen atmosphere. The reaction solution was heated to 50°C and then stirred with a magnetic stirrer. Polymerization was initiated by adding 1.2 g of ethyl 2-bromoisobutyrate as polymerization initiator. When the polymerization rate reached 80%, the temperature of the reaction solution was lowered to 20°C to stop the reaction. Methanol was added to the reaction solution to precipitate the polystyrene such that the polymer, intermediate 1-2, was recovered. A portion of the polymer was sampled for analysis and the remainder was used for azidation.

Further, the number-average molecular weight of the intermediate 1-2 measured by GPC as in Example 1 was 10000.

### (Azidation step)

The polystyrene (intermediate 1-2) obtained in polymerization was dissolved in 50 ml of dimethylformamide, and 0.45 g of sodium azide was added at room temperature to azide the polymer so as to obtain intermediate 2-2.

The intermediate 2-2 was also analyzed by infrared spectrophotometer as in Example 1. A peak was confirmed in the vicinity of 2100 cm⁻¹, and the introduction of azide groups was confirmed.

### (Huisgen reaction)

After the azidation step, 0.39 g of monovinylacetylene, 0.57 g of copper (II) acetate, and 0.74 g of sodium ascorbate were added to react the azide ends of the intermediate 2-2 with MVA so as to obtain 1-polystyrene-4-vinyl-1,2,3-triazole (compound 2).

The obtained compound 2 was dissolved in tetrahydrofuran, precipitated by adding methanol, and then filtered. The residue was dried under reduced pressure to obtain a sample. After dissolving the sample in heavy chloroform, the 1H-NMR spectrum was measured. Measurement data was corrected based on the peak of chloroform (7.24 ppm) in heavy chloroform used as the solvent.

As a result of the NMR measurement, peaks derived from hydrogen atom 3 and hydrogen atom 4 in the formula (5) were confirmed between 5 and 6 ppm.

Further, the number-average molecular weight of the compound 2 measured by GPC as in Example 1 was 10000.

### (Example 3)

### (Methyl methacrylate polymerization step)

The polymerization reaction was performed according to Reference 2 (Macromolecules 1997, 30, 2216-2218.).

First, 50 ml of acetone, 50 g of methyl methacrylate, 2.2 g of pentamethyldiethylenetriamine, and 0.90 g of copper(I) bromide were charged to a 200 ml eggplant-shaped flask, and frozen and degassed three times under nitrogen atmosphere. The reaction solution was heated to 50°C and then stirred with a magnetic stirrer. Polymerization was initiated by adding 2.4 g of ethyl 2-bromoisobutyrate as polymerization initiator. When the polymerization rate reached 80%, the temperature of the reaction solution was lowered to 20°C to stop the reaction. Toluene was added to the reaction solution to precipitate the polymethyl methacrylate such that the polymer, intermediate 1-3, was recovered. A portion of the polymer was sampled for analysis and the remainder was used for azidation.

Further, the number-average molecular weight of the intermediate 1-3 measured by GPC as in Example 1 was 5000.

### (Azidation step)

The polymethyl methacrylate (intermediate 1-3) obtained in polymerization was dissolved in 50 ml of dimethylformamide, and 0.89 g of sodium azide was added at room temperature to azide the polymer so as to obtain intermediate 2-3.

The intermediate 2-3 was also analyzed by infrared spectrophotometer as in Example 1. A peak was confirmed in the vicinity of 2100 cm⁻¹, and the introduction of azide groups was confirmed.

### (Huisgen reaction)

After the azidation step, 0.78 g of monovinylacetylene, 1.1 g of copper (II) acetate, and 1.5 g of sodium ascorbate were added to react the azide ends of the intermediate 2-3 with MVA so as to obtain 1-polymethyl methacrylate-4-vinyl-1,2,3-triazole (compound 3).

The obtained compound 3 was dissolved in tetrahydrofuran, precipitated by adding methanol, and then filtered. The residue was dried under reduced pressure to obtain a sample. After dissolving the sample in heavy chloroform, the 1H-NMR spectrum was measured. Measurement data was corrected based on the peak of chloroform (7.24 ppm) in heavy chloroform used as the solvent.

As a result of the NMR measurement, peaks derived from hydrogen atom 1 and hydrogen atom 2 in the formula (5) were confirmed between 7 and 8 ppm.

Further, the number-average molecular weight of the compound 3 measured by GPC as in Example 1 was 5000.

### (Example 4)

### (Methyl methacrylate polymerization step, azidation step)

The Polymerization and azide reactions were performed according to Reference 6 (J. Am. Chem. Soc., 2017, 139, 10551-10560).

First, 20 g of methyl methacrylate, 6.67 g of toluene, 6.67 g of 18-crown-6 ether, 7.80 g of ethyl-2-iodopropionate, and 6.67 g of sodium azide were charged to a 200 ml eggplant-shaped flask, and frozen and degassed three times under nitrogen atmosphere. The reaction solution was heated to 70°C and then stirred with a magnetic stirrer. When the polymerization rate reached 80%, the temperature of the reaction solution was lowered to 20°C, 95.59 g of dimethylformamide was added to the reaction solution, and the mixture was stirred for 18 hours to convert iodine at the polymer ends of the produced intermediate 1-4 to azide. A water/methanol = 50/50 mixture was added to the reaction solution to precipitate the polymethyl methacrylate such that the polymer, intermediate 2-4, was recovered. A portion of the polymer was sampled for analysis and the remainder was used for Huisgen reaction.

Further, the number-average molecular weight of the intermediate 2-4 measured by GPC as in Example 1 was 5,500. The intermediate 2-4 was also analyzed by infrared spectrophotometer as in Example 1. A peak was confirmed in the vicinity of 2100 cm⁻¹, and the introduction of azide groups was confirmed.

### (Huisgen reaction)

After the azidation step, 0.78 g of monovinylacetylene, 1.1 g of copper (II) acetate, and 1.5 g of sodium ascorbate were added to react the azide ends of the intermediate 2-4 with MVA so as to obtain 1-polymethyl methacrylate-4-vinyl-1,2,3-triazole (compound 4).

The obtained compound 4 was dissolved in tetrahydrofuran, precipitated by adding methanol, and then filtered. The residue was dried under reduced pressure to obtain a sample. After dissolving the sample in heavy chloroform, the 1H-NMR spectrum was measured. Measurement data was corrected based on the peak of chloroform (7.24 ppm) in heavy chloroform used as the solvent.

As a result of the NMR measurement, peaks derived from hydrogen atom 1 and hydrogen atom 2 in the formula (5) were confirmed between 7 and 8 ppm.

Further, the number-average molecular weight of the compound 4 measured by GPC as in Example 1 was 5,400.

### (Example 5)

### (Butadiene polymerization step)

The polymerization reaction was performed according to Reference 3 (ACS Catal. 2020, 10, 12, 6645-6663).

First, 50 ml of toluene, 50 g of butadiene, 2.2 g of pentamethyldiethylenetriamine, and 0.90 g of copper(I) bromide were charged to a 200 ml metal pressure vessel, and frozen and degassed three times under nitrogen atmosphere. The reaction solution was heated to 50°C and then stirred with a mechanical stirrer. Polymerization was initiated by adding 2.4 g of ethyl 2-bromoisobutyrate as polymerization initiator. When the polymerization rate reached 80%, the temperature of the reaction solution was lowered to 20°C to stop the reaction. Methanol was added to the reaction solution to precipitate the polybutadiene such that the polymer, intermediate 1-5, was recovered. A portion of the polymer was sampled for analysis and the remainder was used for azidation.

Further, the number-average molecular weight of the intermediate 1-5 measured by GPC as in Example 1 was 5000.

### (Azidation step)

The polybutadiene (intermediate 1-5) obtained in polymerization was dissolved in 50 ml of dimethylformamide, and 0.89 g of sodium azide was added at room temperature to azide the polymer so as to obtain intermediate 2-5.

The intermediate 2-5 was also analyzed by infrared spectrophotometer as in Example 1. A peak was confirmed in the vicinity of 2100 cm⁻¹, and the introduction of azide groups was confirmed.

### (Huisgen reaction)

After the azidation step, 0.78 g of monovinylacetylene, 1.1 g of copper (II) acetate, and 1.5 g of sodium ascorbate were added to react the azide ends of the intermediate 2-4 with MVA so as to obtain 1-polybutadiene-4-vinyl-1,2,3-triazole (compound 5).

The obtained compound 5 was dissolved in tetrahydrofuran, precipitated by adding methanol, and then filtered. The residue was dried under reduced pressure to obtain a sample. After dissolving the sample in heavy chloroform, the 1H-NMR spectrum was measured. Measurement data was corrected based on the peak of chloroform (7.24 ppm) in heavy chloroform used as the solvent.

As a result of the NMR measurement, peaks derived from hydrogen atom 1 and hydrogen atom 2 in the formula (5) were confirmed between 7 and 8 ppm.

Further, the number-average molecular weight of the compound 5 measured by GPC as in Example 1 was 5000.

### (Example 6)

### (Vinyl acetate polymerization step)

The polymerization reaction was performed according to Reference 4 (AIChE J. 55 (2009) 737-746.).

First, 50 g of vinyl acetate, 2,9 g of terpyridine , and 0.62 g of copper(I) chloride were charged to a 100 ml eggplant-shaped flask, and frozen and degassed three times under nitrogen atmosphere. The reaction solution was heated to 50°C and then stirred with a magnetic stirrer. Polymerization was initiated by adding 2.4 g of ethyl 2-bromoisobutyrate as polymerization initiator. When the polymerization rate reached 80%, the temperature of the reaction solution was lowered to 20°C to stop the reaction. Toluene was added to the reaction solution to precipitate the polyvinyl acetate such that the polymer, intermediate 1-6, was recovered. A portion of the polymer was sampled for analysis and the remainder was used for azidation.

Further, the number-average molecular weight of the intermediate 1-6 measured by GPC as in Example 1 was 5000.

### (Azidation step)

The polyvinyl acetate (intermediate 1-6) obtained in polymerization was dissolved in 50 ml of dimethylformamide, and 0.89 g of sodium azide was added at room temperature to azide the polymer so as to obtain intermediate 2-6.

The intermediate 2-6 was also analyzed by infrared spectrophotometer as in Example 1. A peak was confirmed in the vicinity of 2100 cm⁻¹, and the introduction of azide groups was confirmed.

### (Huisgen reaction)

After the azidation step, 0.78 g of monovinylacetylene, 1.1 g of copper (II) acetate, and 1.5 g of sodium ascorbate were added to react the azide ends of the intermediate 2-6 with MVA so as to obtain 1-polyvinyl acetate-4-vinyl-1,2,3-triazole (compound 6).

The obtained compound 6 was dissolved in tetrahydrofuran, hexane was added and precipitated, and the filtered residue was dried under reduced pressure to obtain a sample. After dissolving the sample in heavy chloroform, the 1H-NMR spectrum was measured. Measurement data was corrected based on the peak of chloroform (7.24 ppm) in heavy chloroform used as the solvent.

As a result of the NMR measurement, peaks derived from hydrogen atom 1 and hydrogen atom 2 in the formula (5) were confirmed between 7 and 8 ppm.

Further, the number-average molecular weight of the compound 6 measured by GPC as in Example 1 was 5000.

### (Example 7)

### (Acrylonitrile polymerization step)

The polymerization reaction was performed according to Reference 5 (Macromolecules 1997, 30, 6398-6400).

First, 50 ml of dimethylformamide, 50 g of acrylonitrile, 2.0 g of bipyridine, and 0.90 g of copper (I) bromide were charged to a 200 ml eggplant-shaped flask, and frozen and degassed three times under nitrogen atmosphere. The reaction solution was heated to 50°C and then stirred with a mechanical stirrer. Polymerization was initiated by adding 1.7 g of ethyl 2-bromopropionitrile as polymerization initiator. When the polymerization rate reached 80%, the temperature of the reaction solution was lowered to 20°C to stop the reaction. Methanol was added to the reaction solution to precipitate the polyacrylonitrile such that the polymer, intermediate 1-7, was recovered. A portion of the polymer was sampled for analysis and the remainder was used for azidation.

Further, the number-average molecular weight of the intermediate 1-7 measured by GPC as in Example 1 was 5000. However, the solvent used was dimethylformamide.

### (Azidation step)

To the dimethylformamide solution of polyacrylonitrile (intermediate 1-7) obtained in polymerization, 0.89 g of sodium azide was added at room temperature to azide the polymer ends so as to obtain intermediate 2-7.

The intermediate 2-7 was also analyzed by infrared spectrophotometer as in Example 1. A peak was confirmed in the vicinity of 2100 cm⁻¹, and the introduction of azide groups was confirmed.

### (Huisgen reaction)

After the azidation step, 0.78 g of monovinylacetylene, and 1.5 g of sodium ascorbate were added to react the azide ends of the intermediate 2-7 with MVA so as to obtain 1-polyacrylonitrile-4-vinyl-1,2,3-triazole (compound 7).

The obtained compound 7 was dissolved in dimethylsulfoxide, precipitated by adding methanol, and then filtered. The residue was dried under reduced pressure to obtain a sample. After dissolving the sample in heavy dimethyl sulfoxide, the 1H-NMR spectrum was measured. The measured data was corrected based on the peak of heavy dimethyl sulfoxide (2.50 ppm) in heavy dimethyl sulfoxide used as the solvent.

As a result of the NMR measurement, peaks derived from hydrogen atom 1 and hydrogen atom 2 in the formula (5) were confirmed between 7 and 8 ppm.

Further, the number-average molecular weight of the compound 7 measured by GPC as in Example 1 was 5000. However, the solvent used was dimethylformamide.

## Claims

1. A compound comprising:
a first portion; and
a second portion,
wherein the first portion comprises a polymer chain, and
the second portion comprises a triazole skeleton and a polymerizable group bonded to the triazole skeleton,
wherein the polymer chain comprises a radically polymerizable monomer unit,
the radically polymerizable monomer unit is one or more monomer units selected from the group consisting of a styrene-based monomer unit, a (meth)acryl-based monomer unit, a diene-based monomer unit, a vinyl ether-based monomer unit, and an unsaturated nitrile-based monomer unit, and
wherein the second portion has a structure represented by the following formula (2) 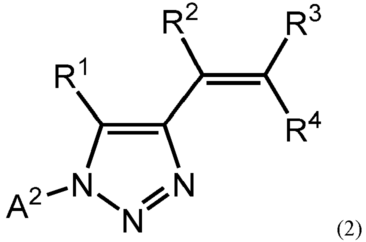
wherein
A² represents a bond with the first portion,
R¹ is any one selected from the group consisting of hydrogen, chlorine, bromine, iodine, a substituted or unsubstituted alkyl group, alkenyl group, aryl group, mercapto group, or heterocyclyl group, a substituted or unsubstituted silyl group, a substituted or unsubstituted ether group, and a substituted or unsubstituted amino group and
R², R³, and R⁴ are each independently any one selected from the group consisting of hydrogen, chlorine, bromine, iodine, a substituted or unsubstituted alkyl group, alkenyl group, aryl group, mercapto group, or heterocyclyl group, a substituted or unsubstituted silyl group, a substituted or unsubstituted ether group, and a substituted or unsubstituted amino group.

2. The compound of Claim 1,
wherein the first portion comprises an end group derived from an atomic transfer radical polymerization initiator or an iodine transfer polymerization initiator.

3. A method of producing the compound of Claim 1 or 2, comprising:
a polymerization step;
an azide group introduction step; and
a polymerizable group introduction step,
wherein in the polymerization step, a first intermediate is produced by polymerization of the radically polymerizable monomer,
in the azide group introduction step, a second intermediate is produced by azide reaction to the first intermediate, and
in the polymerizable group introduction step, the second intermediate is reacted with monovinylacetylene or a monovinylacetylene derivative.

## Patentansprüche

1. Verbindung, umfassend:
einen ersten Abschnitt; und
einen zweiten Abschnitt,
wobei der erste Abschnitt eine Polymerkette umfasst, und
der zweite Abschnitt ein Triazolgrundgerüst und eine polymerisierbare Gruppe umfasst, die an das Triazolgrundgerüst gebunden ist,
wobei die Polymerkette eine radikalisch polymerisierbare Monomereinheit umfasst,
wobei es sich bei der radikalisch polymerisierbaren Monomereinheit um eine oder mehrere Monomereinheiten handelt, ausgewählt aus der Gruppe bestehend aus einer styrolbasierten Monomereinheit, einer (Meth)acrylat-basierten Monomereinheit, einer dienbasierten Monomereinheit, einer vinyletherbasierten Monomereinheit und einer ungesättigten nitrilbasierten Monomereinheit, und
wobei der zweite Abschnitt eine Struktur aufweist, die durch die folgende Formel (2) dargestellt ist 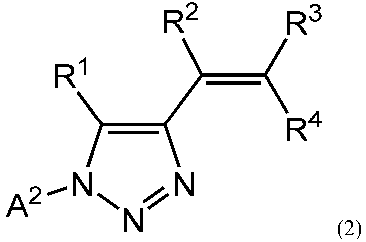
wobei
A² eine Bindung mit dem ersten Abschnitt darstellt,
R¹ ein beliebiges ist, ausgewählt aus der Gruppe bestehend aus Wasserstoff, Chlor, Brom, Iod, einer substituierten oder unsubstituierten Alkylgruppe, Alkenylgruppe, Arylgruppe, Mercaptogruppe oder Heterocyclylgruppe, einer substituierten oder unsubstituierten Silylgruppe, einer substituierten oder unsubstituierten Ethergruppe und einer substituierten oder unsubstituierten Aminogruppe, und
R², R³ und R⁴ jeweils unabhängig voneinander beliebige sind, ausgewählt aus der Gruppe bestehend aus Wasserstoff, Chlor, Brom, Iod, einer substituierten oder unsubstituierten Alkylgruppe, Alkenylgruppe, Arylgruppe, Mercaptogruppe oder Heterocyclylgruppe, einer substituierten oder unsubstituierten Silylgruppe, einer substituierten oder unsubstituierten Ethergruppe und einer substituierten oder unsubstituierten Aminogruppe.

2. Verbindung nach Anspruch 1,
wobei der erste Abschnitt eine Endgruppe umfasst, die von einem Initiator für die radikalische Atomtransferpolymerisation oder einem Initiator für die Iodtransferpolymerisation abgeleitet ist.

3. Verfahren zum Herstellen der Verbindung nach Anspruch 1 oder 2, umfassend:
einen Polymerisationsschritt;
einen Schritt zur Einführung einer Azidgruppe; und
einen Schritt zur Einführung einer polymerisierbaren Gruppe,
wobei in dem Polymerisationsschritt ein erstes Zwischenprodukt durch Polymerisation des radikalisch polymerisierbaren Monomers hergestellt wird,
in dem Schritt zur Einführung einer Azidgruppe ein zweites Zwischenprodukt durch Azidreaktion mit dem ersten Zwischenprodukt hergestellt wird, und
in dem Schritt zur Einführung einer polymerisierbaren Gruppe das zweite Zwischenprodukt mit Monovinylacetylen oder einem Monovinylacetylen-Derivat umgesetzt wird.

## Revendications

1. Composé comprenant :
une première partie ; et
une seconde partie,
dans lequel la première partie comprend une chaîne de polymère, et
la seconde partie comprend un squelette de triazole et un groupe polymérisable lié au squelette de triazole,
dans lequel la chaîne de polymère comprend une unité monomère à polymérisation radicale, l'unité monomère à polymérisation radicale est une ou plusieurs unités monomères choisies dans le groupe constitué d'une unité monomère à base de styrène, d'une unité monomère à base de (méth)acryl, d'une unité monomère à base de diène, d'une unité monomère à base d'éther de vinyle et d'une unité monomère à base de nitrile insaturé, et
dans lequel la deuxième partie a une structure représentée par la formule suivante (2) 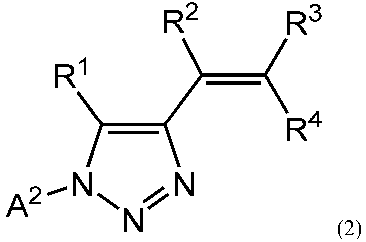
dans lequel
A² représente une liaison avec la première partie,
R¹ est l'un quelconque choisi dans le groupe constitué de l'hydrogène, du chlore, du brome, de l'iode, d'un groupe alkyle substitué ou non substitué, d'un groupe alcényle substitué ou non substitué, d'un groupe aryle substitué ou non substitué, d'un groupe mercapto substitué ou non substitué, ou d'un groupe hétérocyclyle substitué ou non substitué, d'un groupe silyle substitué ou non substitué, d'un groupe éther substitué ou non substitué, et d'un groupe amino substitué ou non substitué, et
R², R³ et R⁴ sont chacun indépendamment l'un quelconque choisi dans le groupe constitué de l'hydrogène, du chlore, du brome, de l'iode, d'un groupe alkyle substitué ou non substitué, d'un groupe alcényle substitué ou non substitué, d'un groupe aryle substitué ou non substitué, d'un groupe mercapto substitué ou non substitué ou d'un groupe hétérocyclyle substitué ou non substitué, d'un groupe silyle substitué ou non substitué, d'un groupe éther substitué ou non substitué, et d'un groupe amino substitué ou non substitué.

2. Composé de la revendication 1,
dans lequel la première partie comprend un groupe terminal dérivé d'un initiateur de polymérisation radicalaire par transfert atomique ou d'un initiateur de polymérisation par transfert d'iode.

3. Procédé de production du composé de la revendication 1 ou 2, comprenant :
une étape de polymérisation ;
une étape d'introduction d'un groupe azide ; et
une étape d'introduction d'un groupe polymérisable,
dans lequel, lors de l'étape de polymérisation, un premier intermédiaire est produit par polymérisation du monomère à polymérisation radicale,
dans l'étape d'introduction d'un groupe azide, un second intermédiaire est produit par réaction azide sur le premier intermédiaire, et
dans l'étape d'introduction d'un groupe polymérisable, le second intermédiaire est mis en réaction avec le monovinylacétylène ou un dérivé du monovinylacétylène.
